# EUROPEAN PATENT SPECIFICATION

(11) **EP 1 088 951 B1**
(45) Date of publication and mention of the grant of the patent: **28.06.2006**
(21) Application number: 00402624.1
(22) Date of filing: 21.09.2000
(51) Int. Cl.: E05B 17/14, B62H 5/04, E05B 47/00

(54) **Cylinder lock protector for motor vehicle.**
Zylinderschlossabdeckung für Fahrzeuge
Dispositif de protection pour une serrure cylindrique de véhicule

(30) Priority: 30.09.1999 JP 28070299
(43) Date of publication of application: 04.04.2001
(73) Proprietor: HONDA GIKEN KOGYO KABUSHIKI KAISHA, Minato-ku, Tokyo (JP)
(72) Inventor: Kondo, Nobuyuki, 1-4-1 Chuo, Wako-shi, Saitama-ken (JP); Nakano, Junichi, 1-4-1 Chuo, Wako-shi, Saitama-ken (JP); Onozuka, Tadashi, 1-4-1 Chuo, Wako-shi, Saitama-ken (JP)
(74) Representative: Poulin, Gérard

(56) References cited:
- EP-A- 0 367 000
- FR-A- 2 677 069
- JP-A- 9 317 268
- JP-A- 11 044 132
- JP-A- 2000 104 426
- US-A- 5 718 137

## Description

### Detailed Description of the Invention

### Technical Field

The present invention relates to a cylinder lock protector which can be easily attached to a cylinder lock without any protector and at a reduced cost.

### Related Art

A cylinder lock protector has been known in order to protect the cylinder lock against malicious damage, as disclosed in Japanese Patent JP 11-44 132 A entitled "Protector for Cylinder Lock", for example, which discloses the features of the preamble of claim 1.

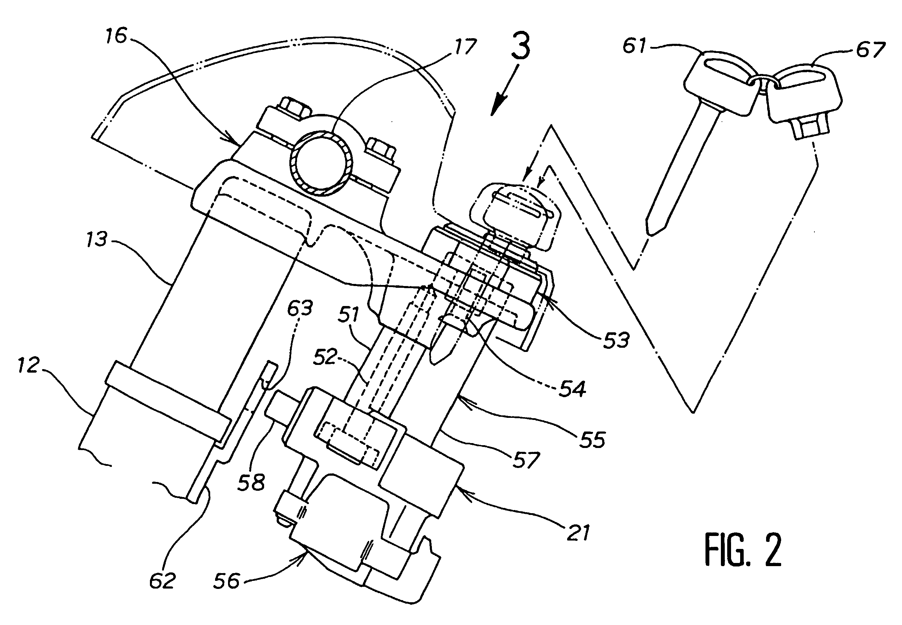

As shown in Fig. 2 of the publication, the ring 12 substantially in the shape of a cap is fixedly attached using a screw 14 to the upper part of the cylinder body 2. The shutter mounting hole 12a is formed atop the ring 12, and the magnet lock 16 is provided atop the ring 12 in order to open or close the shutter 15. The shutter 15 and the magnet lock 16 constitute the protector for the cylinder lock 1 (see Fig. 2 of the publication).

### Problems to be solved by the Invention

With the foregoing related art, the shutter 15 and magnet lock 16 constituting the protector are housed in the ring 12. Therefore, if such a protector is to be added to a cylinder lock without a protector, the ring of the cylinder lock should be replaced with a new compatible one or should be re-designed, which may result in an increase in a component cost of the protector, a cost of making a die, and overall manufacturing cost.

It is therefore an object of the invention to provide a cylinder lock protector which can be easily added, at a reduced cost, to a cylinder lock without any protector for a motor vehicle.

### Means for solving the Problems

In order to accomplish the object of the invention, there is provided a cylinder lock protector according to claim 1.

The protector is positioned above the cylinder lock which is arranged with the hole of the key cylinder opening upward, is attached to the handle bar support bracket, and opens or closes the shutter thereof. The protector protects the opening of the key cylinder against malicious damage.

The protector which is independent from the cylinder lock is positioned above the cylinder lock without a protector, and is attached to the handlebar support bracket. Therefore, the protector can be easily added without modifying the cylinder lock, and at a reduced cost.

### Brief Description of the Drawings

The invention will be described with reference to the preferred embodiment shown in the accompanying drawings, which should be observed in the orientation of reference numerals.
Fig. 1 is a side view of the motorcycle to which the cylinder lock protector of the invention is applied.
Fig. 2 is a side view of the essential parts of the front part of the motorcycle where the cylinder lock protector is attached.
Fig. 3 is a top plan view of the cylinder lock protector, observed in the direction of arrow 3 in Fig. 2.
Fig. 4 is a sectional view of the cylinder lock protector, taken along line 4-4 in Fig. 3.
Fig. 5(a) to Fig. 5(c) show the magnet key of the cylinder lock protector.
Fig. 6 is a top plan view of the front part of the motorcycle provided with the cylinder lock protector.
Fig. 7 shows how the main switch and the cylinder lock protecting are assembled.
Fig. 8(a) to Fig. 8(d) show the operation of the shutter of the cylinder lock protector.

### Description of the Preferred Embodiment

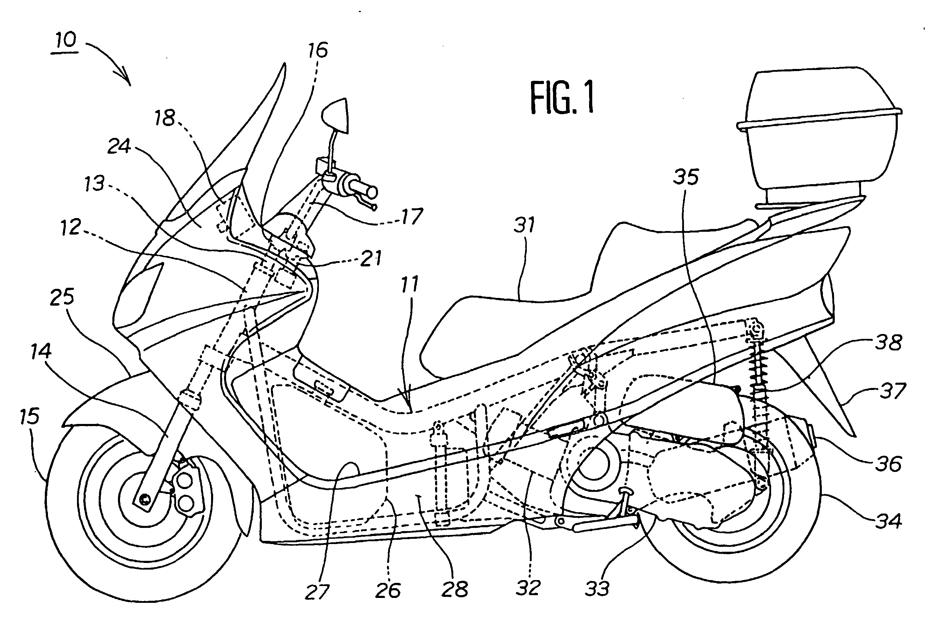

Fig. 1 is a side view of a motor vehicle, i.e. a motorcycle 10, to which a cylinder lock protector of the invention is applied. The motorcycle 10 is a scooter type motorcycle, and comprises: a body frame 11; a head pipe 12 constituting the front part of the body frame 11; a stem shaft 13 movably coupled to the head pipe 12; a front fork 14 and a front wheel 15 coupled to the lower part of the stem shaft 13; a handlebar support bracket 16 (called the "handlebar bracket 16" hereinafter) coupled to the top end of the stem shaft 13; a handlebar 17; an meter 18 including a speedometer, tachometer and so on and positioned in front of the handlebar 17; and a main switch 21 including a cylinder lock (to be described later) positioned behind the handlebar 17.

Referring to Fig. 1, the motorcycle 10 further includes: a front cover 24; a front mudguard 25; a fuel tank 26; a footrest 27; a body cover 28; a seat 31; an engine 32; a transmission system 33; a rear wheel 34; an air cleaner 35; a muffler 36; a rear mudguard 37; and a rear cushion unit 38.

Fig. 2 is a side view of the front essential part of the motorcycle 10 where the cylinder lock protector 53 (called the "protector 53") is arranged. A main switch 21 is attached to the rear lower part of the handlebar bracket 16 via a pair of collars 51 (only one collar 51 being shown in Fig. 2) using a pair of bolts 52 (only one bolt 52 being shown in Fig. 2). The protector 53 for protecting the main switch 21 is attached to the rear top of the handlebar bracket 16 using a pair of small screws 54 (only one small screw 54 being shown).

The main switch 21 includes a handle lock 55 functioning as a cylinder lock for locking the steering operation of the handlebar 55, and an ignition switch 56 attached at the bottom of the handle lock 55.

The handle lock 55 includes: a cylindrical member rotatably inserted into a key cylinder 57 having a key hole at its top (to be described later); a tumbler fitted into the cylindrical member and being engageable with the inner surface of the key cylinder; a crank provided at the lower part of the cylindrical member as an integral part; and a handle lock pin 58 coupled to the crank.

When the main key 61 is inserted into the key hole, the inner surface of the key cylinder 57 is disengaged from the tumbler, which enables the cylindrical member to rotate in the key cylinder 57 in response to turning of the main key 61.

The ignition switch 56 includes a movable terminal integrally rotatable with the crank of the handle lock 55, and an immovable terminal attached to a vehicle body. When the main key 61 is turned to the position ON, the movable and immovable terminals are brought into contact with each other, so that an ignition circuit and other electric circuits are switched on. Conversely, when the main key 61 is turned to the position OFF, the movable and immovable terminals are disengaged, which switches off the ignition circuit and electric circuits. When the main key 61 is turned to the position ON and a starter switch is also turned on, a starting motor rotates, and an engine is activated.

In order to lock the steering operation of the handlebar 17, i.e., in order to perform handle locking, the main key 61 is inserted into the key hole, thereby disengaging the tumbler from the inner surface of the key cylinder 57. Thereafter, the main key 61 is turned to the handle locking position in order to rotate the crank via the cylindrical member, so that the handle lock pin 58 is pushed out of the main switch 21, and is inserted into a pin opening 63 on a lock plate 62 extending from the head pipe 12, which completes the handle locking operation.

When disabling the handle locking, the main key 61 is inserted into the key hole, and the tumbler is disengaged from the inner surface of the key cylinder 57. After turning the main key 61 from the handle lock position to either the position OFF or ON, the crank is rotated via the cylindrical member. The handle lock pin 58 is drawn into the main switch 21, and is released from the pin opening 63 of the lock plate 62 extending from the head pipe 12. Thus, the handle locking is disabled.

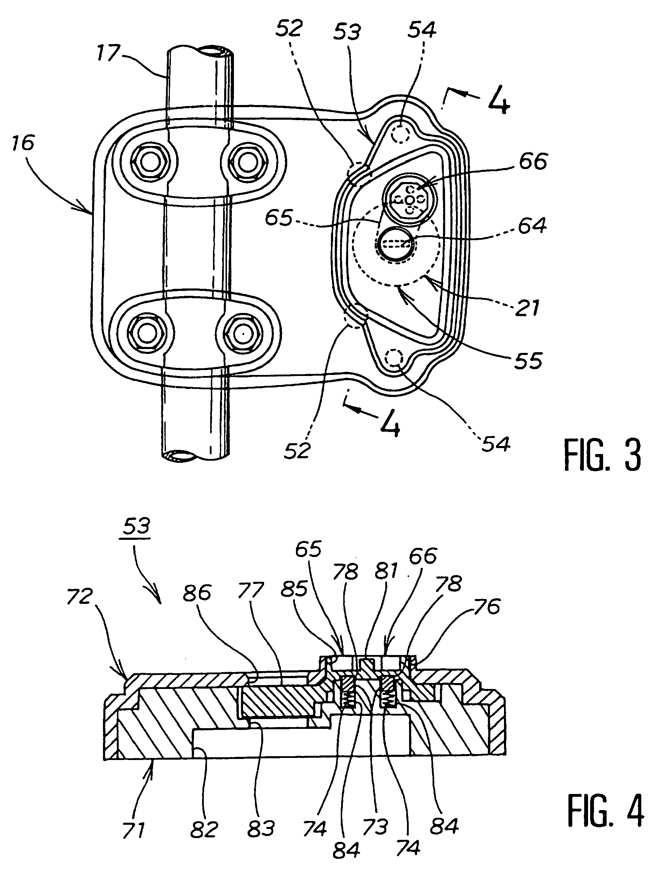

Fig. 3 shows the protector 53, observed in the direction depicted by arrow 3 in Fig. 2. The handlebar 17 is attached to the handlebar bracket 16. The protector 53 is positioned behind the handlebar 17 in order to cover the upper part of the handle lock 55 of the main switch 21, and a key hole 64 of the handle lock 55 is closed by a shutter 65 of the protector 53.

In this state, it is possible to prevent malicious damage such as filling foreign matter into the key hole 64, and to protect the handle lock 55 as the cylinder lock.

In Fig. 3, reference numeral 66 denotes a magnet key receptacle into which an octagonal magnet key 67 is fitted. The key 67 is separate from the main key 16 (shown in Fig. 2) and is used to operate the shutter 65.

Fig. 4 is a sectional view of the protector 53, taken along line 4-4 in Fig. 3. The.protector 53 includes: a bottom 71; a cover 72 extending over the bottom 71; the shutter 65 provided between the bottom 71 and the cover 72; a plurality of movable magnets 73 arranged under the magnet key receptacle 66 of the shutter 65; a plurality of springs 74 for urging the movable magnets 73 toward the magnet key receptacle 66; and the magnet key 67 (shown in Fig. 2).

The shutter 65 has a shaft 76 serving as a rotation axis, and a plate 77 for opening and closing the key hole 64 (see Fig. 3). The shaft 76 has the magnet key receptacle 66 on its front surface, and a plurality of recesses 78 on the rear surface thereof. The movable magnets 73 are fitted into the recesses 78. A projection 81 is provided at the center of the magnet key receptacle 66.

The bottom 71 has: a key cylinder opening 82 into which the upper part of the key cylinder 57 (see Fig. 2) of the main switch 21 (Fig. 2) is inserted; a bottom key opening 83 communicating with the key cylinder opening 82 in order to receive the main key 61 (Fig. 2); and a plurality of movable magnet openings 84 for receiving each pair of movable magnet 73 and spring 74 in a movable state.

The cover 72 has a shaft opening 85 for receiving the shaft 76 of the shutter 65, and a cover side key opening 86 for receiving the main key 61.

In the state shown in Fig. 4, one end each of the movable magnets 73 advances into each recess 78 of the shutter 65 by the resilient force of the springs 74 while the other end of each of the movable magnets 73 remains in each movable magnet opening 84, thereby preventing the turning of the shutter 65 with respect to the bottom 71.

In the state shown in Fig. 4, the plate 77 of the shutter 65 stays between the bottom key opening 83 on the bottom 71 and the cover side key opening 83 on the cover 72, which is effective in preventing foreign matter from being put into the key hole 64 (shown in Fig. 3), and the shutter 65 from being opened.

This protector 53 comprises nonmagnetic components except for the movable magnets 73.

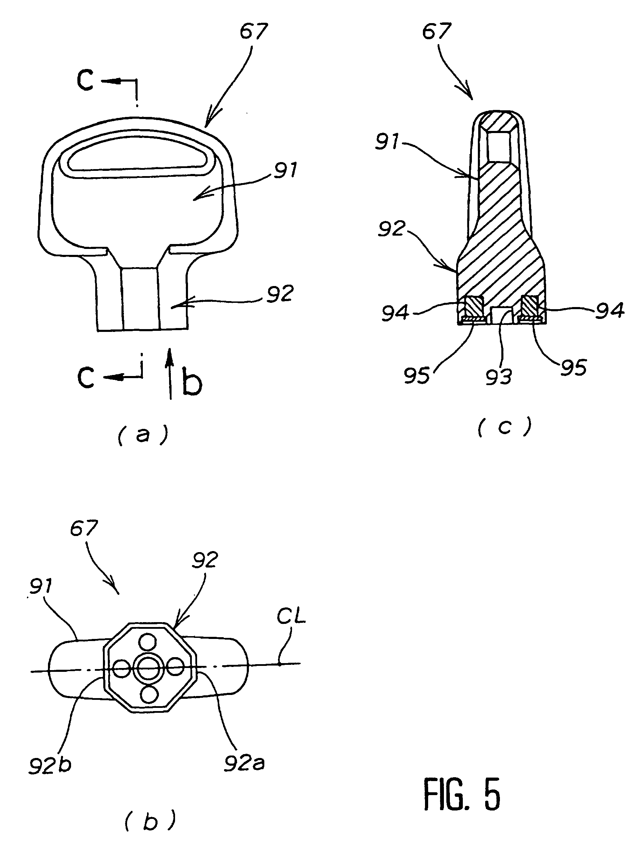

Figs. 5(a) to 5(c) show the magnet key 67 of the cylinder lock protector 53 according to the present invention.

Fig. 5(a) is a front view of the magnet key 67, which includes a grip 91, and a magnet housing 92 extending from the grip 91.

Fig. 5(b) is a bottom view of the magnet key 67, observed in the direction of arrow b in Fig. 5(b). The magnet housing 92 is octagonal and is inserted into the octagonal magnet key receptacle 66 of the protector 53 of Fig. 3. Specifically, sides 92a and sides 92b of the magnet housing 92 are differentiated, and the octagon is axi-symmetrical with respect to the center line CL so that the grip 91 is oriented in the same direction when the magnet key 67 is used.

The magnet key 67 has a section as shown in Fig. 5(c), taken along line c-c in Fig. 5(a). The magnet housing 92 is provided with a center opening formed at its bottom, a plurality of key side magnets 94 embedded near the bottom. The key side magnets 94 have their surfaces covered with films 95.

When the center opening 93 is engaged with the projection 81 in the magnet key receptacle 66 of the protector 53, each of the key side magnets 94 (shown in Fig. 5(c)) comes close to each of the movable magnets 73 (see Fig. 4). In this state, the polarity of the key side magnets 94 near the movable magnets 73 is the same as the polarity of the movable magnets 93 near the key side magnets 94.

The magnet key 67 is made of nonmagnetic material such as resin, except for the key side magnets 94.

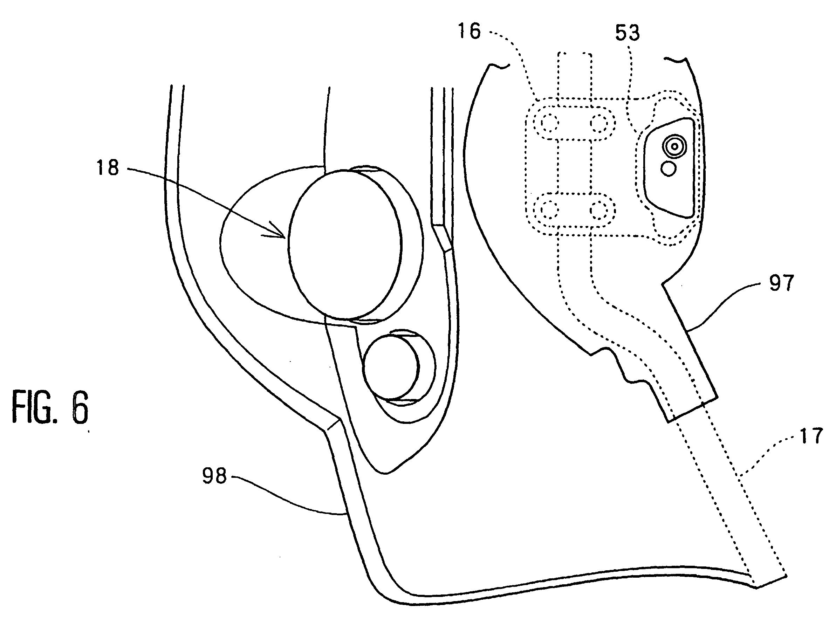

Fig. 6 is a top plan view of the front part of the motorcycle to which the cylinder lock protector of the invention is applied, showing that a handle cover 97 extends over the handlebar bracket 16 and the handlebar 17, and a part of the protector 53 is exposed from the rear part of the handle cover 97. In Fig. 6, reference numeral 98 denotes a front inner cover provided inside the front cover 24.

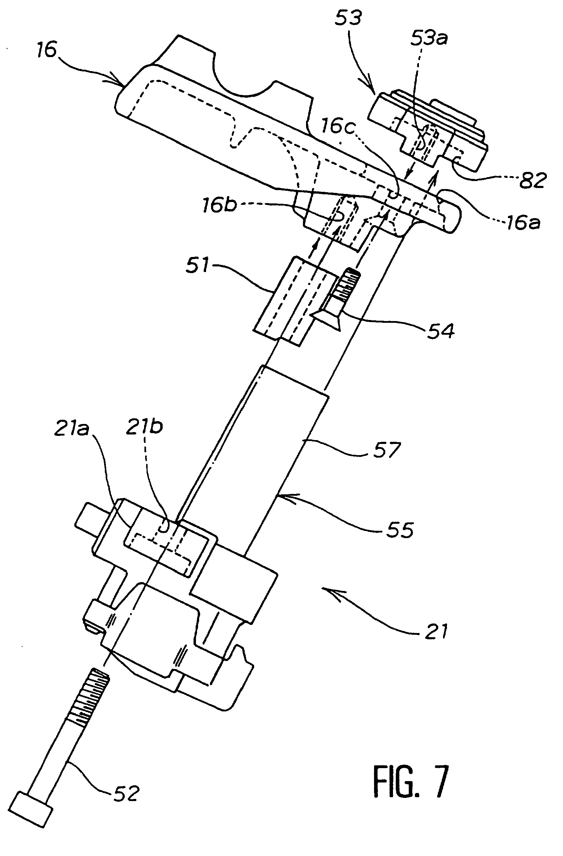

The main switch 21 and protector 53 are assembled in the following manner, as shown in Fig. 7.

First of all, the key cylinder 57 of the main switch 21 is inserted into the main switch opening 16a, which is on the handlebar bracket 16, via the collars 51 from the underside of the handlebar bracket 16. A bolt 52 is inserted from the underside into a bolt hole 21b formed on a side projection 21a of the main switch 21 and into the collars 51, and is screwed into a female screw 16b in the handlebar bracket 16. Thus, the main switch 21 is assembled to the handlebar bracket 21.

The cylinder opening 82 of the protector 53 is fitted via the handlebar bracket 16 with the key hole of the key cylinder 57 opening upward. The screws 54 are put in from the underside into small screw openings 16c formed on the handlebar bracket 16, and are screwed into female screws 53a of the protector 53, so that the protector 53 is completely assembled into the handlebar bracket 16.

The main switch 21 and protector 53 are assembled into the handlebar bracket 16 as described above.

The protector 53 can be easily assembled in the main switch 21 without modifying the main switch 21.

As described above, the invention is applied to the motorcycle 10 in which the stem shaft 13 is movably coupled to the head pipe 12 in order to steer the front wheel 15, and the handlebar bracket 16 is provided atop the stem shaft 13. The handle lock 55 of the main switch 21 is attached to the handlebar bracket 16 (shown in Fig. 7) in such a manner that the key hole 64 (shown in Fig. 3) of the key cylinder 57 opens upward. In order to protect the handle lock 55 against malicious damage such as putting foreign matter therein, the protector 53 is attached to the handlebar bracket 16, and opens and closes the key hole 64 using the shutter 65 (shown in Fig. 3). The protector 53 is operated by the magnet key 67 (shown in Fig. 2) which is separate from the main key 61 (shown in Fig. 2).

In order to protect the handle lock 55 without a protecting facility, the protector 53 is not directly attached to the handle lock 55 but to the handlebar bracket 16. Therefore, it is not necessary to modify the handle lock 55 for this purpose, which is effective in enabling the addition of the protecting facility at a reduced cost.

The shutter 65 is opened and closed in the protector 53 in the following manner.

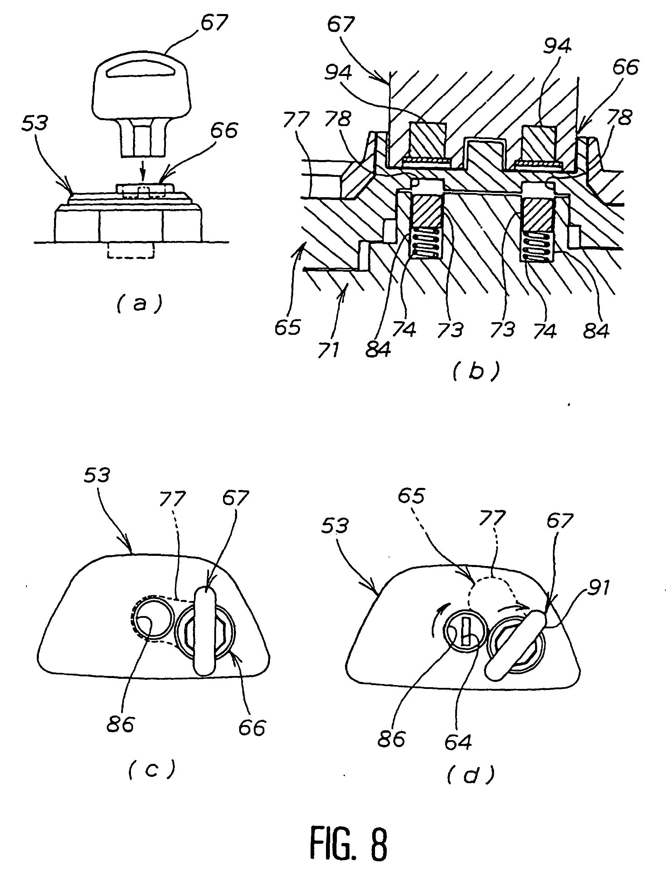

Figs. 8(a) to 8(d) show the operation of the shutter 65 of the protector 53.

Referring to Fig. 8(a), the magnet key 67 of the protector 53 is put into the magnet key receptacle 66.

As shown in Fig. 8(b), when both the movable magnets 73 and the key side magnets 94 having the same polarity approach one another, the movable magnets 73 are repelled from the key side magnets 94, come out of the recesses 78 of the shutter 65 against the resilient force of the springs 74, and move down in passages 84 in the bottom 71.

Therefore, the bottom 71 and the shutter 65 which have been coupled by the shutter 65 are released.

Fig. 8(c) is a top plan view showing the protector 53 in the state of Fig. 8(b). When the grip 91 of the magnet key 67 is turned clockwise as shown in Fig. 8(d), the plate 77 of the shutter 65 is moved, so that the key hole 64 of the key cylinder 61 is exposed.

In this state, the main key 61 can be inserted into the key hole 64.

The protector 53 is operated by the magnet key 67 which is separate from the main key 61, which prevents the protector 53 being operated with a key except for the magnet key 67, i.e. it is possible to prevent the shutter 65 from being opened.

According to claim 1, the cylinder lock is attached to the handlebar bracket with the key hole of the key cylinder opening upward, and the cylinder lock protector is attached to the handlebar bracket at the position above the cylinder lock. Therefore, the cylinder lock protector can be easily attached above any cylinder lock without modifying it and at a reduced cost.

## Claims

1. A cylinder lock protector (53) for a motor vehicle, said protector comprising a magnet key receptacle (66), a movable shutter (65) having a plate (77) for opening and closing a hole (64) of an upwardly opening key cylinder (57) of a cylinder lock of the motor vehicle, and movable magnets (73) urged by spring means (74) towards said magnet key receptacle (66), in order to lock said shutter (65) in a closed position of said hole (64) when there is no magnet key received in said magnet key receptacle (66), **characterized in that** said movable shutter (65) further comprises a shaft (76) serving as a rotation axis for said shutter, the magnet key receptacle (66) is provided on a front surface of said shaft (76) and recesses adapted to receive said magnets (73) are provided on a rear surface of said shaft (76) whereby, when a magnet key (67) separate from a main key (61) of the motor vehicle is put into the magnet key receptacle (66) and then turned, in use, the plate (77) of the shutter (65) is moved, so that the hole (64) of the key cylinder (57) is exposed, and **in that**, the motor vehicle including a stem shaft (13) movably attached to a head pipe (12) for the purpose of steering a front wheel (15) and a handlebar support bracket (16) provided at the top of the stem shaft, the protector (53) is attachable to the handlebar support bracket (16) at a position thereof above the cylinder lock (1).

2. A cylinder lock protector (53) according to claim 1, **characterized in that** female screws (53a) are provided on said protector, said female screws being adapted to receive screws (54) extending through screw openings (16c) formed on the handlebar support bracket (16), so that the protector (53) is completely assembled into the handlebar support bracket.

## Patentansprüche

1. Zylinderschloßschutzvorrichtung (53) für ein Motorfahrzeug, wobei die Schutzvorrichtung einen Magnetschlüssel-Sitz (66), eine bewegliche Verschlußklappe (65) mit einer Platte (77) zum Öffnen und Schließen einer Öffnung (64) eines sich nach oben hin öffnenden Schlüsselzylinders (57) eines Zylinderschlosses des Motorfahrzeugs, sowie bewegliche Magneten (73) aufweist, die durch eine Federvorrichtung (74) in Richtung des Magnetschlüssel-Sitzes (66) gedrückt werden, um die Verschlußklappe (65) in einer geschlossenen Position der Öffnung (64) festzuklemmen, in der sich kein Magnetschlüssel im Magnetschlüssel-Sitz (66) befindet, **dadurch gekennzeichnet, dass** die bewegliche Verschlußklappe (65) weiterhin eine Welle (76) umfaßt, die als Rotationsachse für die Verschlußklappe dient, dass der Magnetschlüssel-Sitz (66) auf einer vorderen Oberfläche der Welle (76) vorgesehen ist, und dass Aussparungen, die dazu ausgelegt sind, die Magneten (73) aufzunehmen, auf einer hinteren Oberfläche der Welle (76) vorgesehen sind, wodurch bei der Benutzung, wenn ein Magnetschlüssel (67) unabhängig von einem Hauptschlüssel (61) des Motorfahrzeugs in den Magnetschlüssel-Sitz (66) gesteckt und anschließend gedreht wird, die Platte (77) der Verschlußklappe (65) bewegt wird, so dass die Öffnung (64) des Schlüsselzylinders (57) freigelegt wird, und **dadurch gekennzeichnet, dass** das Motorfahrzeug eine Stangenwelle (13) aufweist, die beweglich an einem Kopfrohr (12) angebracht ist, um ein Vorderrad (15) und einen oben an der Stangenwelle vorgesehenen Gabelkopf (16) zu lenken, und die Schutzvorrichtung (53) an einer Position des Gabelkopfes oberhalb des Zylinderschlosses (1) am Gabelkopf befestigbar ist.

2. Zylinderschloßschutzvorrichtung (53) nach Anspruch 1, **dadurch gekennzeichnet, dass** Hohischrauben (53a) auf der Schutzvorrichtung vorgesehen sind, wobei die Hohlschrauben dazu ausgelegt sind, Schrauben (54) aufzunehmen, die sich durch auf dem Gabelkopf (16) ausgebildete Schraubenöffnungen (16c) hindurch erstrecken, so dass die Schutzvorrichtung (53) vollständig in den Gabelkopf eingebaut ist.

## Revendications

1. Protecteur (53) de serrure à barillet pour un véhicule à moteur, ledit protecteur comprenant un réceptacle (66) de clé magnétique, un volet mobile (65) ayant une plaque (77) pour ouvrir et fermer un trou (64) d'un barillet de serrure (57) s'ouvrant vers le haut d'une serrure à barillet du véhicule à moteur, et des aimants mobiles (73) poussés par des moyens formant ressort (74) vers ledit réceptacle (66) de clé magnétique, afin de verrouiller ledit volet (65) dans une position fermée dudit trou (64) lorsqu'il n'y a pas de clé magnétique reçue dans ledit réceptacle (66) de clé magnétique, **caractérisé en ce que** ledit volet mobile (65) comprend en outre un arbre (76) servant d'axe de rotation pour ledit volet, le réceptacle (66) de clé magnétique est prévu sur une surface avant dudit arbre (76) et des enfoncements adaptés pour recevoir lesdits aimants (73) sont prévus sur une surface arrière dudit arbre (76) de sorte que, lorsqu'une clé magnétique (67) séparée d'une clef principale (61) du véhicule à moteur est placée dans le réceptacle (66) de clé magnétique, et ensuite tournée, lors de l'utilisation, la plaque (77) du volet (65) est déplacée, de sorte que le trou (64) du barillet de serrure (57) est exposé, et **en ce que** le véhicule à moteur comprenant un arbre de tige (13) attaché de manière mobile à un tube de tête (12) afin de diriger une roue avant (15) et une console de support de guidon (16) prévue à la partie supérieure de l'arbre de tige, le protecteur (53) peut être fixé sur la console de support de guidon (16) à une position de celle-ci située au-dessus de la serrure à barillet (1).

2. Protecteur (53) de serrure à barillet selon la revendication 1, **caractérisé en ce que** des vis femelles (53a) sont prévues sur ledit protecteur, lesdites vis femelles étant adaptées pour recevoir des vis (54) s'étendant à travers des ouvertures (16c) de vis formées sur la console de support de guidon (16), de sorte que le protecteur (53) est complètement assemblé dans la console de support de guidon.
